# EUROPÄISCHE PATENTANMELDUNG

(11) **EP 3 037 311 A1**
(43) Veröffentlichungstag der Anmeldung: **29.06.2016**
(21) Anmeldenummer: 15003653.1
(22) Anmeldetag: 22.12.2015
(51) Int. Cl.: B60T 13/46, B60T 17/02

(54) **UNTERDRUCKVORRICHTUNG FÜR EINEN PNEUMATISCHEN BREMSKRAFTVERSTÄRKER**

(30) Priorität: 22.12.2014 DE 102014018944
(71) Anmelder: Henzel Formenbau GmbH, 63584 Gründau (DE)
(72) Erfinder: Henzel, Bernhard, 63584 Gründau (DE)
(74) Vertreter: Behrens, Helmut

(57) **Zusammenfassung**

Die Erfindung betrifft eine Unterdruckvorrichtung für einen pneumatischen Bremskraftverstärker, die zwischen dem Bremskraftverstärker und einer Unterdruckquelle angeordnet ist und mindestens eine Unterdruckleitung mit mindestens einem Rückschlagventil (1) enthält, wobei das Rückschlagventil (1) ein rohrförmiges Gehäuseteil (2) mit einem quellenseitigen- (3) und einem verstärkerseitigen Anschlussstutzenteil (4) aufweist, wobei im quellenseitigen Anschlussstutzenteil (3) mindestens ein Ventilelement (5) und ein Sieb (6) angeordnet ist. Die Erfindung ist dadurch gekennzeichnet, dass das Ventilelement (5) einen Ventiltopfteil (10) enthält, der formschlüssig in dem quellenseitigen Anschlussstutzenteil (3) angeordnet ist, wobei der innere Topfboden (11) als Ventilsitz (7) mit mindestens einer Durchlassöffnung (12) ausgebildet ist und am äußeren Topfboden (15) zur Abdeckung der Durchlassöffnung (12) das Sieb (6) angeordnet ist, wobei am inneren Topfboden (11) die Durchlassöffnung (12) durch den druckfederbelasteten Ventilteller (8) verschließbar ist, wobei sich die Druckfeder (9) zum quellenseitigen Anschlussstutzenteil (3) auf ein mit mindestens einer Durchgangsbohrung (13) versehenes Verschlusselement (14) abstützt, das im quellenseitigen Anschlussstutzenteil (3) fixiert ist.

## Beschreibung

Die Erfindung betrifft eine Unterdruckvorrichtung für einen pneumatischen Bremskraftverstärker nach dem Oberbegriff des Patentanspruchs 1.

Kraftfahrzeuge, insbesondere Personenkraftwagen und leichte Nutzfahrzeuge sind meist mit Unterdruckbremskraftverstärkern ausgestattet. Dabei wird mittels einer Druckdifferenz eine Hilfskraft erzeugt, durch die die Pedalkräfte für den Fahrer verringert werden, um die Fußbremse leichter betätigen zu können. Traditionell wurde der Unterdruck bei Saugmotoren (Ottomotoren) aus dem Saugrohr im Ansaugtrakt der Verbrennungsmaschine bezogen, was kostengünstig und effizient war. Neuerdings arbeiten die aktuellen Ottomotoren häufig mit Benzindirekteinspritzung, so dass der systembedingte im Saugrohr vorhandene Unterdruck entfällt, so dass bei diesen wie bei Dieselmotoren eine separate Unterdruckpumpe vorgesehen ist, um den Unterdruck für den Bremskraftverstärker und teilweise noch weitere Unterdruckverbraucher zu erzeugen. Dazu ist eine Unterdruckvorrichtung erforderlich, die mindestens eine Unterdruckleitung zwischen dem Bremskraftverstärker und der Unterdruckquelle enthält, in der teilweise aus unterschiedlichen Gründen ein Rückschlagventil angeordnet ist.

Aus der DE 79 19 988 U1 ist eine Unterdruckeinrichtung für Kraftfahrzeuge bekannt, die das Eindringen von Öl durch die Unterdruckleitung in dem Bremskraftverstärker verhindern soll. Dazu ist in der Unterdruckleitung zwischen einer Unterdruckpumpe und dem Bremskraftverstärker ein Rückschlagventil angeordnet, das bei maximalem statischen Unterdruck, die Saugleitung zum Bremskraftverstärker verschließt. Das Rückschlagventil ist dabei direkt an der Unterdruckpumpe angeordnet und enthält einen Anschlussnippel, der in einer Bohrung der Pumpe befestigt ist. Der Anschlussnippel ist als Rohrstutzen ausgebildet, der sich in Längsrichtung zum Bremskraftverstärker durch eine stufige Durchmesserverringerung verkleinert, die gleichzeitig einen ringförmigen Ventilsitz koaxial zur Durchgangsbohrung darstellt. Gegenüberliegend zum Ventilsitz ist eine Ventilplatte als Öffnungs- und Schließelement angeordnet, die sich mittels einer Druckfeder auf ein Sieb als Federwiderlager in Richtung zur Unterdruckpumpe abstützt. Im Gleichgewichtszustand des maximalen statischen Unterdrucks ist dieser sowohl zum Bremskraftverstärker als auch zur Unterdruckpumpe gleich groß, so dass dann die Ventilplatte durch die Federkraft auf dem Ventilsitz aufliegt und den Durchfluss des in der Saugleitung möglichweise aufsteigenden Ölflusses oder Öldampfes versperrt. Dadurch soll ein Eindringen von Öl in den Bremskraftverstärker verhindert werden, da dies zu einer Beschädigung des Bremskraftverstärkers führen kann. Bei der Montage oder der Reparatur kann der Saugschlauch leicht vom Anschlussnippel oder dem Bremskraftverstärker abgezogen und wieder aufgesteckt werden, wodurch leicht Staub- und Faserpartikel in diesen eingesaugt werden können. Desweiteren wird auch über den Bremskraftverstärker Außenluft angesaugt, die kleine Schmutzpartikel aufweisen kann. Da sich diese Partikel im späteren Saugbetrieb oberhalb des Siebes und auch an der Ventilplatte ansammeln können, kann dies zu Undichtigkeiten zwischen der Ventilplatte und dem Ventilsitz führen, so dass langfristig ein Eindringen von Öl in den Bremskraftverstärker nicht ausgeschlossen ist.

Aus der EP 0 765 449 B1 ist ein Rückschlagventil bekannt, das zum Absperren einer Unterdruckleitung bei einem Niederdruckverstärker in Kraftfahrzeugen vorgesehen ist. Dabei besteht das Rückschlagventil aus einem Rohrteil in dem quer ein plattenförmiger Ventilsitz befestigt ist, der die Unterdruckseite von der Ansaugseite trennt. In dem Ventilsitz ist eine zentrale Durchgangsbohrung und dazu koaxial mehrere Durchlässe zum Druckausgleich angebracht. Zum Verschließen der Durchlässe ist dabei ein pilzförmiges Verschlussglied aus einem weichelastischen Material vorgesehen, das mit einem zentralen Stiel von der Ansaugseite in die zentrale Durchgangsbohrung eingespannt wird und mit seiner äußeren Unterseite auf einem ringförmigen Wulst des Ventilsitzes aufliegt. Zwischen dem ringförmigen Wulst und der Unterseite des Verschlussglieds ist noch ein feinporiges flaches Sieb angeordnet, durch das die Pfeifgeräusche und ein Einprägen des weichelastischen Verschlussgliedes in die Durchlasslöcher verhindert werden soll. Bei einem erhöhten Unterdruck auf der Ansaugseite hebt sich das weichelastische Verschlussglied von der ringförmigen Wulst des Dichtungssitzes und gibt den Luftdurchlass durch das Sieb und die Durchlasslöcher frei. Dabei hängt der Ventilöffnungsdruck hauptsächlich von der tatsächlichen Elastizität des weichelastischen Verschlussgliedes und seiner Vorspannung in der zentralen Durchlassöffnung ab, die bei dem weichelastischen Material offensichtlich bei großen Temperaturunterschieden auch thermoplastisch wirkt, da sie sich zuvor in die Durchlasslöcher eingeprägt hatte. Ein vorgegebener Öffnungsdruck ist deshalb bei geringer Druckdifferenz und unterschiedlichen Umgebungstemperaturen nicht genau einhaltbar. Deshalb ist es bei einem Saugmotor mit nur geringem Unterdruck gegenüber dem Außendruck insbesondere bei sehr niedrigen Außentemperaturen nicht immer sichergestellt, dass die gewünschte Bremskraftverstärkung zuverlässig zur Verfügung steht. Abhilfe könnte zwar mit einer leistungsstarken zusätzlichen Unterdruckquelle geschaffen werden, die aber ein höheres Gewicht und eine größere Antriebsleistung beanspruchen würde, was wiederum häufig unerwünscht ist.

Der Erfindung liegt deshalb die Aufgabe zugrunde, eine Unterdruckvorrichtung der eingangs genannten Art so zu verbessern, dass im Ruhebetrieb der Unterdruckquelle und bei Druckgleichheit die Unterdruckleitung absolut dicht von dem Bremskraftverstärker getrennt ist und auch bei geringem Unterdrucküberschuß auf der Ansaugseite die Unterdruckleitung sicher zum Bremskraftverstärker geöffnet wird.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, dass durch das auf der zum Bremskraftverstärker gerichteten Seite angeordnete Sieb die im Ansaugstrom befindlichen Staub- und Faserpartikel oder andere Schmutzpartikel sicher vor dem Ventilschaltglied (Ventilsitz/Ventilteller) zurückgehalten werden. Dadurch wird vorteilhafterweise gewährleistet, dass sich zwischen dem Ventilsitz und dem Ventilteller keine im Ansaugstrom befindlichen Partikel ablagern oder festsetzen können, die die Dichtheit auch bei längerer Betriebszeit beeinträchtigen könnten.

Weiterhin hat die Erfindung durch den längsverschieblich angeordneten Ventilteller den Vorteil, der dieser durch die Druckfeder temperaturunabhängig bewegbar ist. Dadurch wird gewährleistet, dass auch bei großen Temperaturunterschieden stets bei gleichbleibenden Druckverhältnissen das Rückschlagventil schließt oder öffnet. Gleichzeitig wird dadurch auch bei sehr niedrigen Außentemperaturen und nur einer geringen Unterdruckdifferenz zum Atmosphärendruck sichergestellt, dass auch dann stets eine Pedaldruckverstärkung durch den Bremskraftverstärker vorhanden ist.

Zusätzlich hat die Ausbildung der Tellerfeder, die als flache Scheibe mit einem Dichtlippenring ausgeformt ist, den Vorteil, dass dadurch eine verhältnismäßig große temperaturunabhängige Dichtungsfläche auf dem Dichtsitz abstützbar ist, die auch bei sehr tiefen Außentemperaturen sicher schließt. Gleichzeitig wird dadurch auch bei einer großen Druckdifferenz zwischen beiden Seiten des Rückschlagventils gewährleistet, dass kaum Leckluft über das Rückschlagventil strömen kann, so dass der Bremskraftverstärker auch bei abgestelltem Motor und damit abgeschalteter Unterdruckquelle die Bremskraftverstärkung lange aufrecht erhält, so dass das Fahrzeug auch bei abgeschaltetem Motor mit geringer Pedalkraft bremsbar ist.

Die Erfindung hat weiterhin den Vorteil, dass durch das quellen- oder pumpenseitig im Ansaugbereich angeordnete Verschlusselement das Ventilelement mit seinem Ventiltopfteil, seinem längsverschieblichen Ventilteller und der Druckfeder zur Montage leicht in den pumpenseitigen Anschlussstutzenteil einsteckbar zu fixieren ist, wobei das Verschlusselement gleichzeitig vorteilhaft als Widerlager der Druckfeder dient. Durch die genaue Fixierung des Verschlusselements als Widerlager in dem pumpenseitigen Anschlussstutzenteil enthält die Druckfeder eine stets gleichbleibende Einbaulage, so dass dadurch auch bei einer Serienproduktion alle Rückschlagventile mit gleichbleibender Federkraft auf den Ventilteller einwirken. Dadurch sind vorteilhafterweise auch genau schaltende Rückschlagventile herstellbar, die weitgehend temperaturunabhängig arbeiten und nur bei einer vorgesehenen Unterdruckdiffenrenz zur Pumpenseite öffnen.

Bei einer besonderen Ausführung der Erfindung ist vorgesehen, das feinmaschige Sieb axial gegenüberliegend zum Ventilsitz in das aus Kunststoffmaterial bestehende Ventiltopfteil umspritzt zu integrieren. Dies hat den Vorteil, dass dieses Ventiltopfteil einfach und kostengünstig herstellbar ist und sichergestellt wird, dass im Ansaugbetrieb alle aus dem Bremskraftverstärker oder der Unterdruckleitung abgesaugten Luft und die in ihr enthaltenen Partikel nur über das vorgeschaltete Sieb durch das Rückschlagventil gelangen können. Dies hat gleichzeitig den Vorteil, dass auch sehr feinmaschige Siebe einfach in das Spritzgießteil integrierbar sind, die auch feinste Verunreinigungen, die sich zwischen dem Ventilsitz und dem Ventilteller absetzen könnten, von diesen ferngehalten werden. Dabei ist es insbesondere vorteilhaft, dass im Zentrum des Siebes eine Wölbung vorgesehen ist, die die ausgesiebten Partikel seitlich ableitet, so dass das Sieb mindestens im Wölbungsbereich auch nach jahrelanger Betriebsdauer immer luftdurchlässig bleibt.

Bei einer weiteren besonderen Ausbildung, bei der der Ventiltopfteil innen zylinderförmig hohl und außen formschlüssig zum pumpenseitigen Anschlussstutzenteil ausgebildet ist, hat den Vorteil, dass dies kostengünstig als Kunststoffspitzgießteil herstellbar und einfach als Rückschlagventil montierbar ist. So stellt der innere Hohlraum einen integrierten Ventilsitz dar, in den der Ventilteller längs verschieblich geführt und mit vormontierter Druckfeder leicht einsetzbar ist.

Eine weitere besondere Ausbildung der Erfindung, bei der das Verschlusselement mit einem abgestuften Widerlager und einer in dem pumpenseitigen Anschlussstutzenteil einschnappbaren Ringwulst versehen ist, hat den Vorteil, dass dadurch das gesamte Rückschlagventil durch einen einfachen Steckvorgang leicht in den pumpenseitigen Anschlussstutzenteil montierbar ist und gleichzeitig darin fixiert wird.

Die Erfindung wird anhand eines Ausführungsbeispiels, das in der Zeichnung dargestellt ist, näher erläutert. Es zeigen:

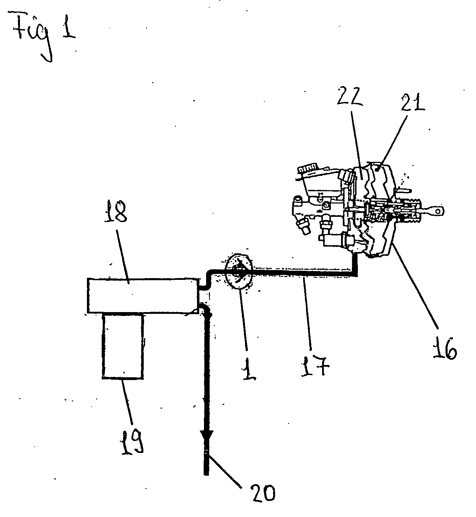

- Fig. 1:: eine schematische Darstellung einer Unterdruckvorrichtung für einen pneumatischen Bremskraftverstärker, und
- Fig. 2:: ein Rückschlagventil der Unterdruckvorrichtung.

In Fg. 1 der Zeichnung ist eine Unterdruckvorrichtung für einen pneumatischen Bremskraftverstärker 16 eines Personenkraftwagens schematisch dargestellt, der eine Unterdruckleitung 17, ein Rückschlagventil 1, eine Unterdruckpumpe 18, einen elektrischen Pumpenmotor 19 und eine Abluftleitung 20 enthält, wobei die Unterdruckleitung 17 zwischen dem Bremskraftverstärker 16 und der Unterdruckpumpe 18 angeordnet ist, in der gleichzeitig das Rückschlagventil 1 druckdicht eingebaut ist.

Die Unterdruckpumpe 18 ist als Unterdruckquelle bei Diesel- und direkteinspritzenden Benzinmotoren notwendig, da dort im Gegensatz zu Vergasermotoren sonst kein Unterdruck am Motor erzeugt wird. Bei Vergasermotoren kann die Unterdruckquelle auch aus dem Ansaugtrakt bestehen, aus dem der Unterdruck mittels der Unterdruckleitung 17 entnommen werden kann. Dieser Unterdruck dient in einem pneumatischen Bremskraftverstärker 16 zur Erzeugung einer Hilfskraft, um die Pedalkraft des Fahrers beim Bremsvorgang zu erleichtern. Deshalb besteht der Bremskraftverstärker 16 aus einer Unterdruckkammer 22 und einer Normaldruckkammer 21, in der ein atmosphärischer Außendruck herstellbar ist. Beim Bremsen wird deshalb über ein Ventil am Bremskraftverstärker 16 Außenluft eingelassen, so dass durch die dann entstehende Druckdifferenz in den beiden Kammern 21,22 der Pedaldruck auf dem Bremskolben entsprechend verstärkt wird. Deshalb ist die Unterdruckpumpe 18 oder der Ansaugtrakt bei Vergasermotoren mit der Unterdruckkammer 22 im Bremskraftverstärker 16 durch eine Unterdruckleitung 17 verbunden. Die Unterdruckpumpe 18 ist vorzugsweise mit einem elektrischen Pumpenmotor 19 oder mittels einer Riemenscheibe antriebsmäßig gekoppelt, so dass während des Motorlaufs immer ein Unterdruck von der Unterdruckpumpe 18 oder dem Ansaugtrakt als Unterdruckquelle erzeugt wird.

Dieser Unterdruck wird über die Unterdruckleitung 17 auf die Unterdruckkammer 22 übertragen, so dass während des Motorlaufs immer ein bestimmter Unterdruck in der Unterdruckkammer 22 herrscht. In diese Unterdruckleitung 17 ist zusätzlich das Rückschlagventil 1 angeordnet, das bei eingeschalteter Unterdruckpumpe 18 im Saugbetrieb so lange geöffnet ist, bis auch in der Unterdruckkammer 22 der maximale Pumpenunterdruck herrscht. Dann schließt das Rückschlagventil 1 so lange, bis das Bremspedal wieder betätigt wird und zusätzlicher Unterdruck in der Unterdruckkammer 22 erforderlich ist. Während des Pumpvorgangs strömt vom Bremskraftverstärker 16 die angesaugte Luft von der Unterdruckkammer 22 durch die Unterdruckleitung 17 und das geöffnete Rückschlagventil 1 zur Unterdruckpumpe 18 und auf dessen Ausblasseite zu einer Abluftleitung 20 in die Atmosphäre oder ein anderes Motorteil.

Da die Zwischenwand zwischen der Unterdruck- 22 und der Normaldruckkammer 21 durch Öl oder Öldämpfe leicht beschädigt werden kann, muss in jedem Fall verhindert werden, dass aus der Unterdruckpumpe 18 oder dem Ansaugkanal Öl oder Öldämpfe über das Rückschlagventil 1 in den Bremskraftverstärker 16 gelangen können. Deshalb ist es wichtig, dass das Rückschlagventil 1 in jedem Fall beim Stillstand der Unterdruckpumpe 18 oder des Fahrzeugmotors geschlossen ist, um eine Beschädigung des Bremskraftverstärkers 16 zu verhindern.

Gleichzeitig muss das Rückschlagventil 1 sicherstellen, das auch schon bei einer geringen Unterdruckdifferenz auf Seiten der Unterdruckquelle das Ventil geöffnet wird, da insbesondere bei Saugmotoren auf der Unterdruckseite nur eine geringe Differenz zum Atmosphärendruck herrscht. Denn auch bei einer geringen Druckdifferenz ist es notwendig, die Bremskraft zu verstärken, da diese bei großer Bremsleistung häufig vom Fahrer am Bremspedal nicht aufgebracht werden kann. Dazu ist ein hochgenau und sicher arbeitendes Rückschlagventil 1 schon aus Sicherheitsgründen wichtig.

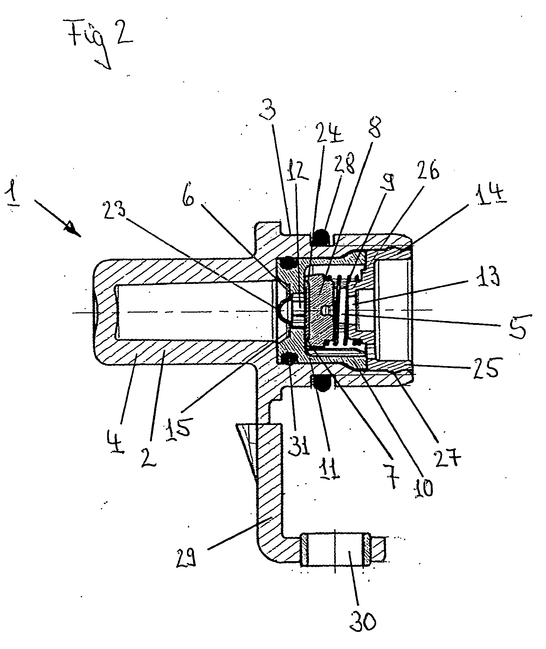

Ein derartiges Rückschlagventil 1 ist in Fig. 2 der Zeichnung näher dargestellt, das innerhalb der Unterdruckleitung 17 oder direkt an der Unterdruckpumpe 18 am Ausgang zum Bremskraftverstärker 16 angebracht ist. Dabei besteht das Rückschlagventil 1 aus einem rohrförmigen Gehäuseteil 2, das einen pumpenseitigen- 3 oder quellenseitigen- und einen verstärkerseitigen Anschlussstutzenteil 4 enthält, wobei das rohrförmige Gehäusteil 2 vorzugsweise aus einem bis mindestens 150°C temperaturbeständigen spritzfähigen Kunststoffmaterial hergestellt ist. Der verstärkerseitige Anschlussstutzenteil 3 ist innen hohl und hat einen um 90° abknickenden, nicht dargestellten Schlauchanschlussstutzenteil. Auf diesem Schlauchanschlussstutzenteil wird die Unterdruckleitung 17 zum Bremskraftverstärker 16, die als Schlauch von ca. 13 mm Innendurchmesser ausgebildet ist, druckdicht aufgesteckt. Dabei besitzt der verstärkerseitige Anschlussstutzenteil 4 vorzugsweise einen Innendurchmesser von ca. 5 bis 10 mm. Das zur Unterdruckquelle oder Unterdruckpumpe 18 gerichtete pumpenseitige Anschlussstutzenteil 3 besitzt vorzugsweise einen Innendurchmesser von 12 bis 20 mm das etwa in der Mitte der axialen Länge des rohrförmigen Gehäuseteils 2 mit dem pumpenseitigen Anschlussstutzenteil 3 fest verbunden ist.

In dem pumpenseitigen Anschlussstutzenteil 3 mit einem etwas vergrößerten Innendurchmesser ist ein Ventilelement 5 des Rückschlagventils 1 angeordnet. Das Ventilelement 5 enthält dabei einen Ventiltopfteil 10, einen Ventilteller 8, eine Druckfeder 9 und ein Ventilverschlusselement 14, durch das der Luftdurchlass zur Unterdruckpumpe 18 verschließbar und bei einer Unterdruckdifferenz im Saugbetrieb wieder öffenbar ist. Dazu ist der Ventiltopfteil 10 im wesentlichen zylinderförmig ausgebildet, wobei dessen Außendurchmesser formschlüssig an den Innendurchmesser des pumpenseitigen Anschlussstutzenteils 3 angepasst ist. Zum abgedichteten Einsatz des Ventiltopfteils 10 in den pumpenseitigen Anschlussstutzenteil 3 enthält der Ventiltopfteil 10 an seiner äußeren Mantelfläche eine umlaufende Nut, in der zur Abdichtung vorzugsweise eine erste O-Ringdichtung 31 als Dichtelement eingelegt ist. Zum verstärkerseitigen Anschlussstutzenteil 4 gerichtet enthält der Ventiltopfteil 10 einen Töpfboden 11,15, der eine zentrale Durchlassöffnung 12 oder einen strukturierten Luftdurchlassbereich enthält, der etwa einen Durchmesser von 5 bis 10 mm aufweist.

An der äußeren Topfbodenseite 15, die zum verstärkerseitigen Anschlussstutzenteil 4 gerichtet ist, ist die Durchlassöffnung 12 oder der Luftdurchlassbereich von einem feinmaschigen Sieb 6 abdeckt. Dabei besitzt das Sieb 6 eine Maschenweite von vorzugsweise 0,05 bis 0,15 mm, das auch kleine Staub- und Faserpartikel im Saugbetrieb zurückhält. Das feinmaschige Sieb 6 besteht vorzugsweise aus einem Edelstahldrahtgeflecht mit einem Drahtdurchmesser von ca. 0,05 bis 0,1 mm, wobei das Sieb 6 vorzugsweise im Ventiltopfboden eingespritzt und somit mit dem Ventiltopfteil 10 fest verbunden ist.

Das Sieb 6 ist dabei im Grunde als flache Scheibe ausgebildet, die im Zentrum eine halbkugelförmige Wölbung 23 zum verstärkerseitigen Anschlussstutzenteil 4 aufweist, dessen Durchmesser etwa 1/3 der Durchlassöffnung 12 entspricht und die die angesaugten Staub- oder Faserpartikel radial nach außen auf dem Drahtgeflecht abgleiten lässt, so dass auch bei langjähriger Betriebszeit ein zusetzen des Siebes 6 sicher verhindert wird.

Der innere Topfboden 11 ist koaxial zur Durchlassöffnung 12 wie eine ebene Ringscheibe ausgebildet, die den Ventilsitz 7 darstellt. Da der Ventiltopfteil 10 ebenfalls aus einem hitzebeständigen spritzgießfähigen Kunststoff hergestellt ist, weist die innere Ringscheibenfläche eine ebene glatte Oberfläche auf, auf die sich der gegenüberliegende Ventilteller 8 dichtend abstützt. Dabei besteht der Ventilteller 8 vorzugsweise aus einem gut dichtenden elastischen bis mindestens 150°C hitzebeständigen Kunststoff, der im Innenbereich des Ventiltopfteils 10 längs verschieblich angeordnet ist. An seinem zum inneren Topfboden 11 gerichteten Außenrand ist dabei eine ringförmige Dichtlippe 24 vorgesehen, die mindestens im Ruhezustand auf dem Ventilsitz 7 aufliegt und die die Durchlassöffnung 12 luftdicht verschließt. Dazu ist auf der Rückseite des Ventiltellers 8 eine Druckfeder 9 angeordnet, die zwischen dem Ventilteller 8 und dem Verschlusselement 14 im Ventiltopfteil 10 fixiert ist.

Die Druckfeder 8 ist vorzugsweise als Schraubenfeder ausgebildet und besteht aus einem dünnen Federstahldraht, die eine vorgegebene Federkraft aufweist. Dadurch wird der Ventilteller 8 bei einer geringen Druckdifferenz von höchstens 0,1 bar Unterdruck auf der Seite der Unterdruckquelle 16 geöffnet. Hingegen wird bei einem Druckgleichgewicht auf beiden Seiten des Ventilelements 5 oder einem Unterdruck auf der Verstärkerseite das Rückschlagventil 1 durch den Ventilteller 8 geschlossen. Dadurch wird erreicht, dass das Rückschlagventil 1 nur im Saugbetrieb geöffnet ist und ansonsten in jedem Fall geschlossen bleibt.

Um den Ventilteller 8 kontinuierlich mit der Federkraft zu belasten, stützt sich die Druckfeder 9 mit ihrer Gegenseite auf das Verschlusselement 14 ab, das im pumpenseitigen Anschlussstutzenteil 3 fixiert ist. Dabei besteht das Verschlusselement 14 aus einem Rohrstutzen 25 mit einer abgestuften Durchmesserverringerung 26, die zum Ventilteller 8 gerichtet ist. Die Druckfeder 9 stützt sich dabei auf die Durchmesserverringerung 26 als Wiederlager ab und ist mit ihrem Außendurchmesser auf den Innendurchmesser der Druckfeder 9 abgestimmt und somit am Verschlusselement 14 fixiert. Im Zentrum der Durchmesserverringerung 26 ist mindestens eine Durchgangsbohrung 13 angeordnet, damit die Ansaugluft ungehindert durch das Verschlusselement 14 strömen kann. Der Rohrstutzen 25 des Verschlusselements 14 besitzt einen Außendurchmesser, der auf den Innendurchmesser des pumpenseitigen Anschlussstutzenteils 3 angepasst ist, so dass beide formschlüssig ineinander passen.

Zur Fixierung ist dabei an der äußeren Mantelfläche des Rohrstutzens 25 vorzugsweise eine Ringwulst 27 angeordnet, die in eine daran angepasste Ringnut des pumpenseitigen Anschlussstutzenteils 3 gegen eine Federkraft eingeschnappt ist. Dabei stößt das Verschlusselement 14 in seiner axialen Ausrichtung gegen das Ventiltopfteil 10, wodurch gleichzeitig auch dieses in den pumpenseitgen Anschlussstutzenteil 3 fixiert ist. Zur vereinfachten Herstellung und wegen einer guten Passform besteht auch das Verschlusselement 14 vorzugsweise aus einem bis mindestens 150° C hitzebeständigen Kunststoff, der dem des Ventilkopfteils 10 und des rohrförmigen Gehäuseteils 2 gleicht. Dabei werden diese Kunststoffteile vorzugsweise in einem Kunststoffspitzgießverfahren kostengünstig hergestellt.

Zur Aufnahme des Ventilelements 5 mit seinem Ventiltopfteil 10, seinem Ventilteller 8, seiner Druckfeder 9 und dem Verschlusselement 14 besitzt der pumpenseitige Anschlussstutzenteil 3 eine Länge von ca. 20 mm bei einem Innendurchmesser von ca. 16 mm und einem Außendurchmesser von ca. 18 mm. Dabei ist an der äußeren Mantelfläche des pumpenseitigen Anschlussstutzenteils 3 in einer zusätzlichen Ringnut noch eine zweite O-Ringdichtung 28 angebracht, so dass dieser Anschlussstutzenteil 3 in einer Bohrung an der Unterdruckpumpe 18 druckdicht einsetzbar ist. Zusätzlich ist an dem rohrförmigen Gehäuseteil 2 vorzugsweise im axialen Mittenbereich noch ein Befestigungswinkel 29 mit einer Befestigungsbohrung 30 angespritzt, durch die das Rückschlagventil 1 direkt an der Unterdruckpumpe 18 oder einem festen Motorteil anbringbar ist. Allerdings kann der pumpenseitige Anschlussstutzenteil 3 auch als Schlauchklemmteil ausgebildet sein, so dass das Rückschlagventil 1 an beliebiger Stelle zwischen der Unterdruckquelle 18 und dem Bremskraftverstärker 16 in der Unterdruckleitung 17 angeordnet werden kann.

## Patentansprüche

1. Unterdruckvorrichtung für einen pneumatischen Bremskraftverstärker, die zwischen dem Bremskraftverstärker und einer Unterdruckquelle angeordnet ist und mindestens eine Unterdruckleitung mit mindestens einem Rückschlagventil (1) enthält, wobei das Rückschlagventil (1) ein rohrförmiges Gehäuseteil (2) mit einem quellenseitigen- (3) und einem verstärkerseitigen Anschlussstutzenteil (4) aufweist, wobei im quellenseitigen Anschlussstutzenteil (3) mindestens ein Ventilelement (5) und ein Sieb (6) angeordnet ist, wobei das Ventilelement (5) mindestens einen Ventilsitz (7), einen längs verschiebbaren Ventilteller (8) und eine Druckfeder (9) enthält, wobei die Druckfeder (9) den Ventilteller (8) mit einer vorgegebenen Kraft gegen den Ventilsitz (7) beaufschlagt, wobei das Ventilelement (5) durch die Federkraft verschließbar ist, **dadurch gekennzeichnet, dass** das Ventilelement (5) einen Ventiltopfteil (10) enthält, der formschlüssig in dem quellenseitigen Anschlussstutzenteil (3) angeordnet ist, wobei der innere Topfboden (11) als Ventilsitz (7) mit mindestens einer Durchlassöffnung (12) ausgebildet ist und am äußeren Topfboden (15) zur Abdeckung der Durchlassöffnung (12) das Sieb (6) angeordnet ist, wobei am inneren Topfboden (11) die Durchlassöffnung (12) durch den druckfederbelasteten Ventilteller (8) verschließbar ist, wobei sich die Druckfeder (9) zum quellenseitigen Anschlussstutzenteil (3) auf ein mit mindestens einer Durchgangsbohrung (13) versehenes Verschlusselement (14) abstützt, das im quellenseitigen Anschlussstutzenteil (3) fixiert ist.

2. Unterdruckvorrichtung nach Anspruch 1, **dadurch gekennzeichnet, dass** das Ventiltopfteil (10) aus einem innen hohlen etwa zylinderförmigen Rohrstutzen mit einem flachen Topfbodenteil (11,15) besteht, wobei im Topfbodenteil (11,15) mindestens eine luftdurchlässige Durchlassöffnung (12) belassen ist, die radial innen zum Ventilsitz (7) angeordnet ist.

3. Unterdruckvorrichtung nach Anspruch 1 oder 2, **dadurch gekennzeichnet, dass** der Topfbodenteil (10) aus einem spritzgießfähigen Kunststoff hergestellt ist und das zur Abdeckung der Durchlassöffnung (12) am äußeren Topfboden (15) das Sieb (6) in den Topfbodenteil (10) eingespritzt befestigt ist.

4. Unterdruckvorrichtung nach Anspruch 3, **dadurch gekennzeichnet, dass** das Sieb (6) aus einem feinmaschigen Drahtgeflecht mit einer Maschenweite von ca. 0,05 bis 0,15 mm und einem Drahtdurchmesser von ca. 0,05 bis 0,1 mm besteht, das als Scheibe mit einer im Zentrum halbkugelförmigen Wölbung (23) ausgebildet ist, wobei die Wölbung (23) mit seiner Erhebung zum Bremskraftverstärker (16) ausgerichtet ist.

5. Unterdruckvorrichtung nach einem der Ansprüche 1 bis 4, **dadurch gekennzeichnet, dass** das Ventiltopfteil (10) in seiner Außenform so ausgebildet ist, dass dieses der Innenform des pumpenseitigen Anschlussstutzenteils (3) angepasst ist und in dieses formschlüssig einsteckbar und gegen Leckluft an der äußeren Mantelfläche durch ein Dichtelement (31) abgedichtet ist.

6. Unterdruckvorrichtung nach einem der Ansprüche 1 bis 5, **dadurch gekennzeichnet, dass** der Ventilteller (8) als Scheibe ausgebildet ist, die auf einer dem Ventilsitz (7) zugewandten Seite am Außenrand eine ringförmige axial hervorstehende Wulst oder Dichtlippe (24) aufweist und das mindestens die Dichtlippe (24) oder der Wulst aus einem gut dichtenden elastischen Kunststoff besteht, wobei der Ventilteller (8) axial verschieblich im Inneren des Ventiltopfteils (10) gelagert ist.

7. Unterdruckvorrichtung nach einem der Ansprüche 1 bis 6, **dadurch gekennzeichnet, dass** die Druckfeder (9) als Schraubenfeder ausgebildet ist, die aus einem Federdrahtstahl besteht und sich quellenseitig auf dem Verschlusselement (14) und verstärkerseitig auf dem Ventilteller (8) mit einer vorgegebenen Federkraft abstützt.

8. Unterdruckvorrichtung nach einem der Ansprüche 1 bis 7, **dadurch gekennzeichnet, dass** das Verschlusselement (14) als abgestufter Rohrstutzen (25) ausgebildet ist, dessen abgestufter Teil mindestens eine Durchmesserverringerung (26) und mindestens eine Durchgangsbohrung (13) enthält, wobei der Außendurchmesser der Durchmesserverringerung (26) so auf dem Innendurchmesser der Druckfeder (9) abgestimmt ist, dass diese an das Verschlusselement (14) fixierbar ist.

9. Unterdruckvorrichtung nach einem der Ansprüche 1 bis 8, **dadurch gekennzeichnet, dass** der Außendurchmesser des nicht abgestuften Rohrstutzenteils (25) auf dem Innendurchmesser des quellenseitigen Anschlussstutzenteils (3) abgestimmt ist und auf der äußeren Mantelfläche des nicht abgestuften Rohrstutzenteils (25) eine umlaufende Ringwulst (27) angeordnet ist, die in eine auf der inneren Mantelfläche des quellenseitigen Anschlussstutzenteils (3) vorgesehene wulstartige Ringnut einschnappbar ist.

10. Anordnung einer Unterdruckvorrichtung bei der die Unterdruckquelle (18) mit einem Rückschlagventil (1) verbunden ist, an das eine Unterdruckleitung (17) angeschlossen ist, die mit einer Unterdruckkammer (22) in einem pneumatischen Bremskraftverstärkers (16) verbunden ist, **dadurch gekennzeichnet, dass** das Rückschlagventil (1) ein rohrförmiges Gehäuseteil (2) aufweist, in dessen quellenseitigen Anschlussstutzenteil (3) zunächst der abgedichtete Ventiltopfteil (10) formschlüssig eingesteckt ist und in dessen Innenraum der Ventilteller (8) mit der daran befestigten Druckfeder (9) und daran ausgangsseitig befestigten Verschlusselement 14 eingesteckt ist, wobei das Verschlusselement 14 im quellenseitigen Anschlussstutzenteil (3) fixiert ist, das gleichzeitig auch den Ventiltopfteil (10), den Ventilteller (8) und die Druckfeder (9) in diesem fixiert sind, wobei an dem verstärkerseitigen äußeren Topfboden (15) des Topfbodenteils das Sieb (6) angeordnet ist.
